# EUROPEAN PATENT SPECIFICATION

(11) **EP 4 033 442 B1**
(45) Date of publication and mention of the grant of the patent: **09.10.2024**
(21) Application number: 20866307.0
(22) Date of filing: 17.09.2020
(51) Int. Cl.: G06Q 10/10, G06Q 30/018, G06Q 50/18

(54) **APPARATUS FOR CHECKING LEGISLATION ON CHEMICALS, AND METHOD THEREFOR**
VORRICHTUNG ZUR ÜBERPRÜFUNG DER GESETZGEBUNG ZU CHEMIKALIEN UND VERFAHREN DAFÜR
APPAREIL POUR VÉRIFIER LA LÉGISLATION SUR LES SUBSTANCES CHIMIQUES ET PROCÉDÉ ASSOCIÉ

(30) Priority: 17.09.2019 KR 20190114188
(43) Date of publication of application: 27.07.2022
(73) Proprietor: Safety Assessment Solution Co., Ltd., Seoul 06532 (KR)
(72) Inventor: SHIN, Hee June, Seoul 04081 (KR); CHOI, Yoon Kyoo, Seoul 03002 (KR)
(74) Representative: Frenkel, Matthias Alexander
(86) International application number: PCT/KR2020/012544
(87) International publication number: WO 2021/054735

(56) References cited:
- WO-A2-2005/037419
- JP-A- 2001 273 383
- JP-A- 2002 279 122
- JP-A- 2005 011 286
- KR-A- 20100 100 423
- KR-B1- 101 844 473
- KR-B1- 102 118 146
- US-A1- 2008 261 220

## Description

### Technical Field

The present invention relates to a device and method for reviewing legislation on chemical substances and, in particular, to a device and method for determining analysis information to allow chemical substances and chemical products to meet each country's legislation and automatically provide obligations according to the corresponding country's legislation, according to uses.

Further, the present invention relates to a device and method that determines analysis information to meet each country's legislation on high molecular weight compounds among chemical substances and automatically provides obligations according to the corresponding country's legislation on corresponding chemical substances according to the results of the determination.

### Background Art

Thousands of types of chemicals are registered and managed in the country in accordance with the recently tightened chemicals-related laws nationwide or worldwide. Chemicals are registered by their manufacturers and importers, and the country manages and identifies whether chemicals are safely distributed according to the registered contents.

In general, impurities and by-products inevitably remain along with target chemicals in the process of producing the raw materials for chemical products and other products.

Chemicals remaining along with impurities and by-products must be removed through, e.g., refining for each purpose but, in chemical industry in which annual production reaches tons, the time and costs required for removal must be taken into consideration. If residual impurities and by-product chemicals are hazardous chemicals, problems may arise.

Hazardous chemicals are defined as chemicals that are, or are likely to be, hazardous or risky, such as toxic substances, permitted substances, restricted substances, and prohibited substances.

Hazardous chemicals and intensively controlled substances are not allowed to remain even in a trace, or if the maximum residue limit is exceeded, product distribution is prohibited according to the Chemicals Control Act or must be handled through strict management. Accordingly, the value of the product may be lowered, and it is nearly impossible to check all the matters to be considered in industrial handling, previously in the R&D stage.

When a target chemical is developed in lab, the impurities and by-products generated in the chemical reaction are identified mainly by qualitative analysis, and their content is calculated by quantitative analysis.

Further, most petroleum-based chemicals are UVCB substances (Unknown or Variable composition, Complex reaction products or Biological materials). UVCB substances refer to substances whose chemical structure is unknown or variable, complex reaction products, or biological substances. Since it is difficult to determine the constituents of UVCB substances, one whose specific constituents have a specific distribution as a result of complex analysis and identification using several measurement devices is defined as a corresponding chemical.

A criterion for classifying petroleum-based chemicals as hazardous chemicals and intensively controlled substances is the presence or absence of major harmful factors (aromatic carbon compounds, etc.) among the constituents.

Therefore, qualitative and quantitative analysis of hazardous chemical substances and intensively controlled substance products, R&D substances and petroleum-based substances is required.

In relation to the above analysis, an individual analysis method is determined for each chemical. For example, in the case of petroleum-based substances, the CONCAWE consortium involved in the fulfillment of the EU REACH registration of petroleum-based substances presents the composition, process and analysis methods of petroleum-based substances.

Further, producers, importers, and exporters of chemicals and products must interpret the analysis data of the products they handle in accordance with the laws of each country and fulfill their obligations.

However, the task of understanding and applying each country's chemical regulations and identifying obligations requires a lot of time and manpower.

Among other chemicals, high molecular weight compounds are considered to be much less harmful or hazardous than other chemicals because of their general characteristics that they are difficult to penetrate biological membranes due to their particularly large molecular weight.

For this reason, each country's laws and regulations related to chemicals define conditions for high molecular weight compounds and exempt companies from the registration procedure required for conforming chemicals or simplify the registration procedure.

Each country has substantially the same definition for high molecular weight compounds by their national laws and regulations but has a different fulfillment procedure.

Further, it is required to determine whether high molecular weight compounds meet their definitions, interpret the results according to the national laws and perform fulfill the obligations. Thus, a lot of time and manpower are needed to understand each country's chemicals-related laws and regulations and to apply them to identify the obligations. Document WO 2005/037419 A2 discloses methods and systems for deriving chemical compositions that. are present in a chemical product to be manufactured to provide regulatory compliance information for chemical compositions, including reactants, non-reactants, and chemical intermediaries, in a production process.

Document US 2008/261220 A1 discloses systems for manufacturing detection assays.

### Detailed Description of the Invention

### Technical Problems

The present invention aims to provide a device and method for reviewing legislation on chemical substances, which determines analysis information to meet each country's legislation on chemical substances and chemical products and automatically provides obligations according to the corresponding country's legislation on corresponding chemical substances according to uses.

The present invention also aims to provide a device and method that performs analysis of chemical substance structure and content, such as GC, HPLC, GC, MS, and LC/MS, on chemical substances or products, to determine analysis information to allow the chemical substance or product to meet each country's legislation, and automatically provides obligations according to legislation on the corresponding chemical substance according to the purpose.

The present invention also aims to perform GPC analysis on high molecular weight compounds among chemical substances, identify the state of registration exemption, the state of residual monomer test, and the state of general chemical substance registration based on, e.g., information about the country to manage high molecular weight compounds according to a user input, GPC measurement data according to the GPC analysis, per-country legislation information according to the country information, and monomer information necessary for legislation interpretation, and to provide guide information or automatically create related documents according to the identified state.

### Means to Address the Problems

The invention is defined by the appended claims.

### Effects of the Invention

The present invention may determine analysis information to meet each country's legislation on chemical substances and chemical products and automatically provide obligations according to the corresponding country's legislation on corresponding chemical substances according to uses.

Further, it is possible to perform analysis of chemical substance structure and content, such as GC, HPLC, GC, MS, and LC/MS, on chemical substances or products, to determine analysis information to allow the chemical substance or product to meet each country's legislation, and to automatically provide obligations according to legislation on the corresponding chemical substance according to the purpose.

It is also possible to perform GPC analysis on high molecular weight compounds among chemical substances, identify the state of registration exemption, the state of residual monomer test, and the state of general chemical substance registration based on, e.g., information about the country to manage high molecular weight compounds according to a user input, GPC measurement data according to the GPC analysis, per-country legislation information according to the country information, and monomer information necessary for legislation interpretation, and to provide guide information or automatically create related documents according to the identified state.

### Brief Description of the Drawings

FIG. 1 is a block diagram illustrating a configuration of a device for reviewing legislation on chemical substances according to an embodiment of the present invention.
FIGS. 2 and 3 are flowcharts illustrating a method for reviewing legislation on chemical substances according to an embodiment of the present invention.
FIG. 4 is a flowchart illustrating a method for reviewing legislation on high molecular weight compounds according to an embodiment of the present invention.
FIG. 5 is a view illustrating an example process for reviewing legislation on high molecular weight compound in accordance with the Act on the Registration and Evaluation of Chemical Substances of Korea according to an embodiment of the present invention.
FIG. 6 is a view illustrating an example process for reviewing legislation on high molecular weight compound in accordance with the Toxic Substances Control Act of the United States according to an embodiment of the present invention.

### Mode to Practice the Invention

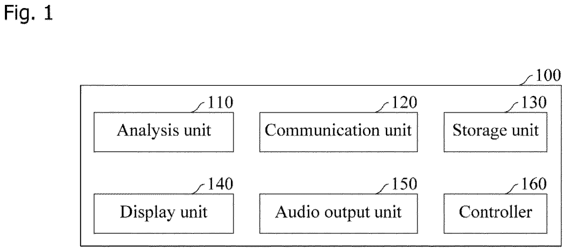

FIG. 1 is a block diagram illustrating a configuration of a device 100 for reviewing legislation on chemical substances according to an embodiment of the present invention.

As shown in FIG. 1, the device 100 for reviewing legislation on chemical substances includes an analysis unit 110, a communication unit 120, a storage unit 130, a display unit 140, an audio output unit 150, and a controller 160. All of the components of the device 100 for reviewing legislation on chemical substances shown in FIG. 1 are not essential components, and the device 100 for reviewing legislation on chemical substances may be implemented with more or less components than those shown in FIG. 1.

According to an embodiment, the device 100 for reviewing legislation on chemical substances may be applicable to various terminals or devices, such as smartphones, portable terminals, mobile terminals, foldable terminals, personal digital assistants (PDAs), portable multimedia players (PMPs), telematics terminals, navigation terminals, personal computers, laptop computers, slate PCs, tablet PCs, ultrabook computers, wearable devices, such as smartwatches, smart glasses, head-mounted displays, etc., Wibro terminals, Internet protocol television (IPTV) terminals, smart TVs, digital broadcast terminals, audio video navigation (AVN) terminals, audio/video (A/V) systems, flexible terminals, or digital signage devices.

The analysis unit 110 may perform a qualitative analysis function on any chemical substance or product to grasp the structure of the chemical substance or the constituent chemical substances of the chemical product, and determine the name of the chemical substance or produce based on the grasped results so as to check legislation on the chemical substance or product.

For example, for a paint sample, the analysis 110 may perform a GC/MS analysis function on the sample, identify the constituent chemical substances of the product, and assign a chemical abstract service (CAS) number, e.g., methyl ethyl ketoxime and titanium dioxide, to the product.

The controller 160 may check whether the chemical substance or product falls under registration and evaluation, whether it falls under the Cosmetics Act, whether it falls under the Pharmaceutical Affairs Act, or whether it falls under the Narcotic Control Act in the order according to the laws based on the name and purpose and usage of the chemical substance or product, and the legislation information about the applicable country and search for obligations according to the relevant laws and regulations.

For example, the controller 160 may identify whether the chemical substance/product is subject to registration and evaluation based on the purpose and usage of the chemical substance with a specific CAS number and applicable country legislation information and, if so, the controller 160 may search for obligations according to the relevant legislation. Otherwise, the controller 160 may identify whether it falls under the Cosmetics Act, the Pharmaceutical Affairs Act, the Narcotics Control Act, and other laws in the order according to the laws and, if it is the case, search for obligations according to the corresponding law. For example, the CAS no. 13463-67-7 and no. 96-29-7 substances may be identified as the existing chemical substances KE-33900 and KE-03881, and the CAS no.96-29-7 substance may be identified as a hazardous chemical substance.

The display unit 140 may output the obligations according to the laws, searched by the controller 160. For example, the display unit 140 may output obligations under the Act on Registration and Evaluation of Chemical Substances corresponding to the manufacture of 100-1000 tons of existing chemical substances and obligations under the Hazardous Chemicals Control Act, etc.

Meanwhile, the analysis 110 performs a GPC (Gel Permeation Chromatography) analysis function on any chemical for the user (or manager) to determine whether the chemical is a high molecular weight compound and generates GPS measurement data (or results of the GPS analysis). In this case, the analysis unit 110 may include a pump (not shown), an injector (not shown), a GPC column (not shown), a detector (not shown), and a data system (not shown) to perform the GPS analysis function. Here, the GPC measurement data includes a retention volume (or retention time), the molecular weight corresponding to the retention volume, an area and a height (differential distribution), a content, and the like.

The communication unit 120 forms a communication connection with any internal component or at least one external terminal via a wired/wireless communication network. In this case, the external terminal may include an externally configured database (not shown), a server (not shown), and the like. Wireless Internet technology which may be adopted for transmission over the wireless communication network may include at least one of wireless LAN (WLAN), digital living network alliance (DLNA), wireless broadband (Wibro), world interoperability for microwave access (Wimax), high speed downlink packet access (HSDPA), high speed uplink packet access (HSUPA), IEEE 802.16, long-term evolution (LTE), LTE-advanced (LTE-A), LTE V2X (C'V2X), wireless mobile broadband service (WMBS), or 5G communication. The communication unit 120 may transmit or receive data according to at least one wireless Internet technology which may include not only the above-enumerated techniques but also other non-mentioned Internet techniques. Short-range communication techniques that may be adopted according to an embodiment may include Bluetooth, radio frequency identification (RFID), infrared data association (IrDA), ultra-wideband (UWB), ZigBee, near-field communication (NFC), ultrasound communication (USC), visible light communication (VLC), Wi-Fi, or Wi-Fi direct. Wired communication techniques that may be adopted according to an embodiment may include power line communication (PLC), universal serial bus (USB) communication, Ethernet, serial communication, or optical/coaxial cable communication.

The communication unit 120 may communicate information or data with any terminal via a USB.

The communication unit 120 transmits or receives wireless signals to/from at least one of a base station, the database, or the server over a mobile communication network established as per mobile communication standards, protocols, or schemes, such as global system for mobile communication (GSM), code division multiple access (CDMA), CDMA2000, enhanced voice-data optimized or enhanced voice-data only (EV-DO), wideband CDMA (WCDMA), high speed downlink packet access (HSDPA), high speed uplink packet access (HSUPA), long term evolution (LTE), or LTE-advanced (LTE-A).

Further, the communication unit 120 transmits the GPC measurement data (or GPC analysis result) for the chemical substance to the server or another terminal under the control of the controller 160.

The storage unit 130 stores various user interfaces (Uls) and graphic user interfaces (GUIs).

The storage unit 130 stores a program and data necessary for the device 100 for reviewing legislation on chemical substances to operate.

In other words, the storage unit 130 may store a plurality of application programs or applications driven on the device 100 for reviewing legislation on chemical substances and data and commands for operation of the device 100 for reviewing legislation on chemical substances. At least some of the application programs may be downloaded from an external server via wireless communication. Further, at least some of these application programs may exist on the device 100 for reviewing legislation on chemical substances from the time of shipment for basic functions of the device 100 for reviewing legislation on chemical substances. Meanwhile, the application program may be stored in the storage unit 130, installed on the device 100 for reviewing legislation on chemical substances, and driven by the controller 160 to perform operations (or functions) of the device 100 for reviewing legislation on chemical substances.

The storage unit 130 may include at least one type of storage medium of flash memory types, hard disk types, multimedia card micro types, card types of memories (e.g., SD or XD memory cards), RAMs (Random Access Memories), SRAMs (Static Random Access Memories), ROMs (Read-Only Memories), EEPROMs (Electrically Erasable Programmable Read-Only Memories), PROMs (Programmable Read-Only Memories), magnetic memories, magnetic disks, or optical discs. The device 100 for reviewing legislation on chemical substances may operate web storage which performs the storage function of the storage unit 130 over the Internet or may operate in association with the web storage.

Further, the storage unit 130 stores the GPC measurement data (or GPC analysis result) for the chemical substance under the control of the controller 160.

The display unit 140 may display various contents, e.g., various menu screens, using the Ul and/or GUI stored in the storage unit 130 under the control of the controller 160. The contents displayed on the display unit 140 include a menu screen including various pieces of text or image data (including various information data), icons, a list menu, combo boxes, or other various pieces of data. The display unit 140 may be a touchscreen.

The display unit 140 may include at least one of a liquid crystal display (LCD), a thin film transistor-liquid crystal display (TFT-LCD), an organic light-emitting diode (OLED), a flexible display, or a three-dimensional (3D) display, an e-ink display, or a light emitting diode (LED) display.

Further, the display unit 140 displays, under the control of the controller 160, the GPC measurement data (or GPC analysis results) for the chemical substance and, if the chemical substance is a high molecular weight compound, relevant documents necessary to be exempt from registration under the related laws.

The audio output unit 150 outputs audio information included in a signal signal-processed by the controller 160. The audio output unit 150 may include, e.g., a receiver, a speaker, and a buzzer.

The audio output unit 150 outputs a guidance (or instruction) audio generated by the controller 160.

Further, the audio output unit 150 outputs, under the control of the controller 160, audio information (or sound effect) corresponding to the GPC measurement data (or GPC analysis results) for the chemical substance and, if the chemical substance is a high molecular weight compound, relevant documents necessary to be exempt from registration under the related laws.

The controller (or micro-controller unit (MCU)) 160 executes an overall control function of the device 100 for reviewing legislation on chemical substances.

Further, the controller 160 executes an overall control function of the device 100 for reviewing legislation on chemical substances using programs and data stored in the storage unit 130. The controller 160 may include a RAM, a ROM, a central processing unit (CPU), a graphics processing unit (GPU), and a bus, and the RAM, ROM, CPU, and GPU may be interconnected via the bus. The CPU may access the storage unit 130 and boot the operating system (OS) stored in the storage unit 130. The CPU may perform various operations using various programs, contents, and data stored in the storage unit 130.

Further, the controller 160 determines (or identifies) whether the chemical substance is a high molecular weight compound exempt from registration, based on, e.g., information about the country to manage the high molecular weight compound, the GPC measurement data (or GPC analysis results) according to the GPC analysis, legislation information for each country according to corresponding country information, and monomer information necessary for interpreting legislation. Here, the country information and the monomer information may be previously input and stored in the storage unit 130 by a user input (or the user's/manager's touch/selection/control) or may be input in real-time. The legislation information for each country is chemical substance-related legislation for each country. The legislation information includes the Act on the Registration and Evaluation of Chemicals, the Chemicals Management Act, the Industrial Safety and Health Act, the Dangerous Substances Safety Management Act, and the High Pressure Gas Safety Management Act of the Republic of Korea, and Section 5 of the TSCA (Toxic Substance Control Act, Federal Toxic Substances Control Act) of the U.S. Further, the monomer information includes the CAS no., molecular weight, molecular formula, and structural formula of the monomer, and the like.

As a result of the determination (or the identification), when it is determined that the chemical substance is a high molecular compound exempt from registration, the controller 160 automatically creates related documents that should be submitted to the relevant organization (or government agency) to be exempt from the registration procedure for the chemical substance determined to be the high molecular weight compound. Here, the related documents may differ for each country. In the case of Korea, the related documents include a GPC analysis report and homogeneity data and, in the case of the United States, the related documents include CS (Certification Statement) required for record keeping.

As such, the controller 160 may automatically create related documents to be submitted to be exempt from the registration procedure when the chemical substance is determined to be less hazardous high molecular weight compound.

Further, the controller 160 displays, on the display unit 140, the created related documents that must be submitted to the related organization (or government agency) to be exempt from the registration procedure for the chemical substance determined to be the high molecular weight compound.

Further, when a registration menu (or registration button/item) configured on one side of the display unit 140 is selected, the controller 160 may transmit, to a related organization server (or government agency server) (not shown), through the communication unit 120, the created related documents required to be submitted to the related organization (or government agency) to be exempt from the registration procedure for the chemical substance determined to be a high molecular weight compound, in conjunction with the related organization server (or government agency server).

Further, if the process for being exempt from the registration procedure for the chemical substance by the transmitted related documents is normally performed, the controller 160 may control the communication unit 120 to information indicating that the procedure to be exempt from the registration on the chemical substance determined to be a high molecular weight compound has been normally performed, from the related organization server.

Further, the controller 160 outputs, through the display unit 140 and/or the audio output unit 150, the received information indicating that the procedure to be exempt from the registration on the chemical substance determined to be a high molecular weight compound has been normally performed.

Further, it is determined (or identified) that the chemical substance is not a high molecular weight compound that meets the registration exemption condition, the controller 160 identifies obligations for the chemical substance based on the information about the country to manage the high molecular weight compound, GPC measurement data according to the GPC analysis, per-country legislation information according to the country information, and monomer information necessary for legislation interpretation and displays the identified obligations (or information about the obligations) on the display unit 140. In this case, the obligations may differ depending on the per-country legislation information.

As such, if the chemical substance is not determined to be the high molecular weight compound, the controller 160 may identify the obligations to be performed according to the country's legislation in relation to the chemical substance and output the identified obligations to be identified by the user (or manager).

As such, it is possible to determine analysis information to meet each country's legislation on high molecular weight compounds among chemical substances and automatically provide obligations according to the corresponding country's legislation on corresponding chemical substances according to the results of the determination.

It is also possible to perform GPC analysis on high molecular weight compounds among chemical substances, identify the state of registration exemption, the state of residual monomer test, and the state of general chemical substance registration based on, e.g., information about the country to manage high molecular weight compounds according to a user input, GPC measurement data according to the GPC analysis, per-country legislation information according to the country information, and monomer information necessary for legislation interpretation, and to provide guide information or automatically create related documents according to the identified state.

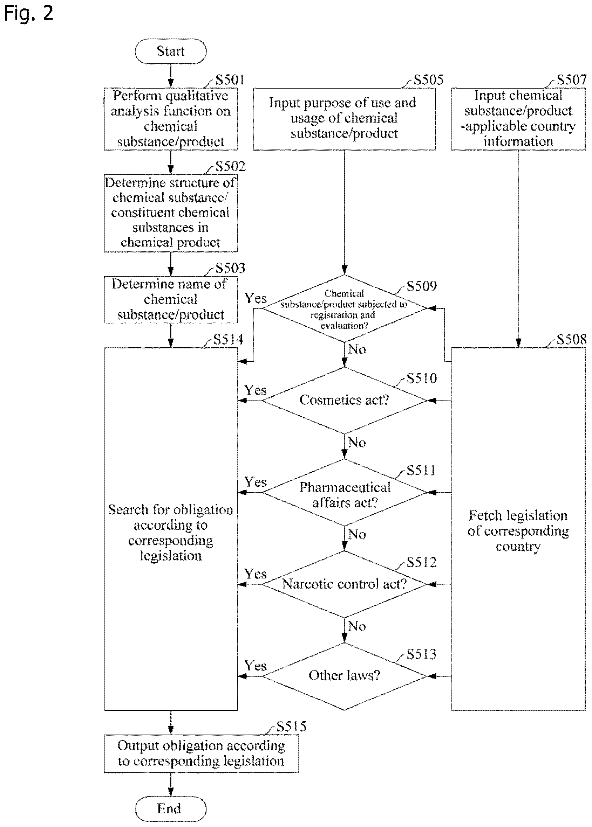

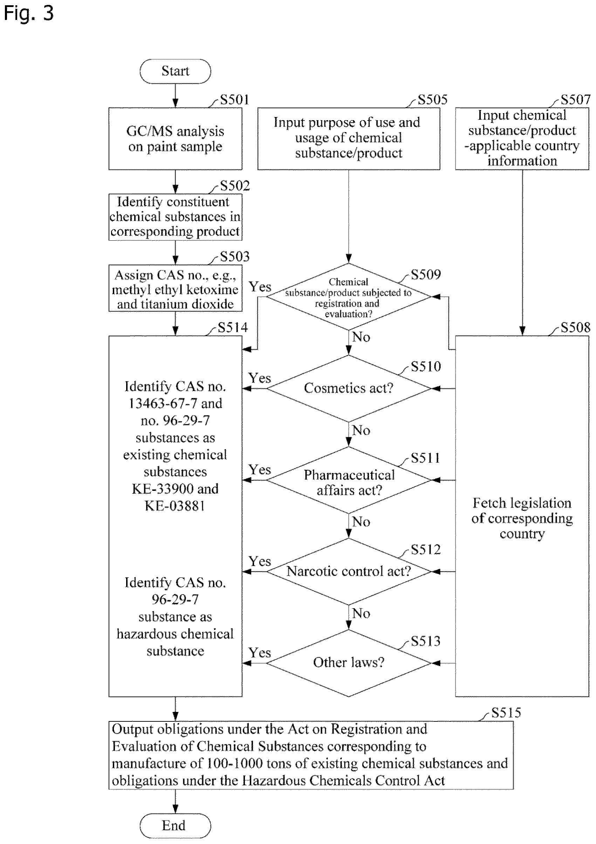

A method for reviewing legislation on high molecular weight compounds according to an embodiment of the present invention is described below in detail with reference to FIGS. 2 and 3.

FIGS. 2 and 3 are flowcharts illustrating a method for reviewing legislation on chemical substances according to an embodiment of the present invention.

First, to check legislation on the chemical substance or product according to an embodiment, as shown in FIG. 2, the analysis unit 110 may perform a qualitative analysis function on any chemical substance or product (S501) to grasp the structure of the chemical substance or the constituent chemical substances of the chemical product (S502), and determine the name of the chemical substance or produce based on the grasped results (S503).

For example, as shown in FIG. 3, for a paint sample, the analysis 110 may perform a GC/MS analysis function on the sample (S501), identify the constituent chemical substances of the product (S502), and assign a chemical abstract service (CAS) number, e.g., methyl ethyl ketoxime and titanium dioxide, to the product (S503).

Thereafter, the controller 160 may receive the name, purpose of use, and usage of the chemical substance or product (S505) and the legislation information of the applicable country (S507) and, based on the received information, identify whether the chemical substance or product falls under registration and evaluation (S509), whether it falls under the Cosmetics Act (S510), whether it falls under the Pharmaceutical Affairs Act (S511), whether it falls under the Narcotic Control Act (S512), and whether it falls under other laws (S513) in the order according to the laws and, if so in each identification process, search for obligations according to the legislation (S514).

For example, as shown in FIG. 3, after receiving the purpose of use and usage of the chemical product with a specific CAS number (S505) and receiving applicable country legislation information (S507), the controller 160 may identify whether the chemical substance/product is subject to registration and evaluation based on the received information and legislation information according to the applicable country information for the chemical substance or product (S509) and, if so, the controller 160 may search for obligations according to the corresponding legislation (S514). Otherwise, the controller 160 may identify whether it falls under the Cosmetics Act, the Pharmaceutical Affairs Act, the Narcotics Control Act, and other laws in the order according to the laws (S510 to S513) and, if it is the case, search for obligations according to the corresponding law. For example, the CAS no. 13463-67-7 and no. 96-29-7 substances may be identified as the existing chemical substances KE-33900 and KE-03881, and the CAS no.96-29-7 substance may be identified as a hazardous chemical substance (S514).

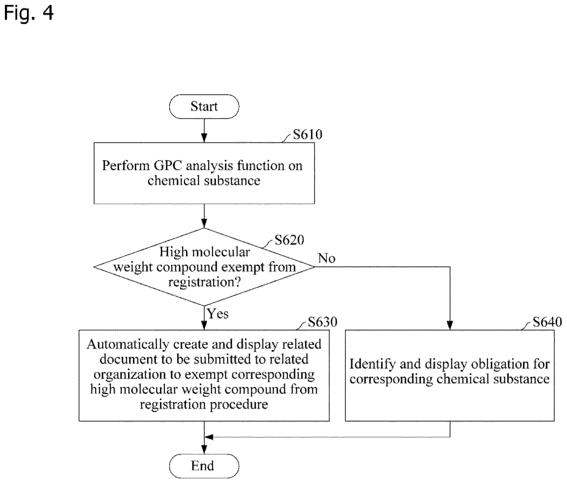

Thereafter, as shown in FIG. 3, the display unit 140 may output the obligations according to the laws, searched by the controller 160 (S515). For example, as shown in FIG. 4, the display unit 140 may output obligations under the Act on Registration and Evaluation of Chemical Substances corresponding to the manufacture of 100-1000 tons of existing chemical substances and obligations under the Hazardous Chemicals Control Act, etc.

FIG. 4 is a flowchart illustrating a method for reviewing legislation on high molecular weight compounds according to an embodiment of the present invention.

The analysis unit 110 performs GPC analysis on a first chemical substance to generate first GPC measurement data.

As another example, the analysis unit 110 performs GPC analysis on a second chemical substance to generate second GPC measurement data (S610).

Thereafter, the controller 160 determines (or identifies) whether the chemical substance is a high molecular weight compound exempt from registration, based on, e.g., information about the country to manage high molecular weight compounds among any chemical substances or products, the GPC measurement data (or GPC analysis results) according to the GPC analysis, legislation information for each country according to corresponding country information, and monomer information necessary for interpreting legislation. Here, the country information and the monomer information may be previously input and stored in the storage unit 130 by a user input (or the user's/manager's touch/selection/control) or may be input in real-time. The legislation information for each country is chemical substance-related legislation for each country. The legislation information includes the Act on the Registration and Evaluation of Chemicals, the Chemicals Management Act, the Industrial Safety and Health Act, the Dangerous Substances Safety Management Act, and the High Pressure Gas Safety Management Act of the Republic of Korea, and TSCA Section 5 of the U.S. Further, the monomer information includes the CAS no., molecular weight, molecular formula, and structural formula of the monomer, and the like.

For example, the controller 160 determines whether the first chemical substance is exempt from registration based on information about a first country (e.g., Korea) to manage the high molecular weight compound, the first GPC measurement data, legislation information according to the first country information, and pre-configured first monomer information necessary for legislation interpretation.

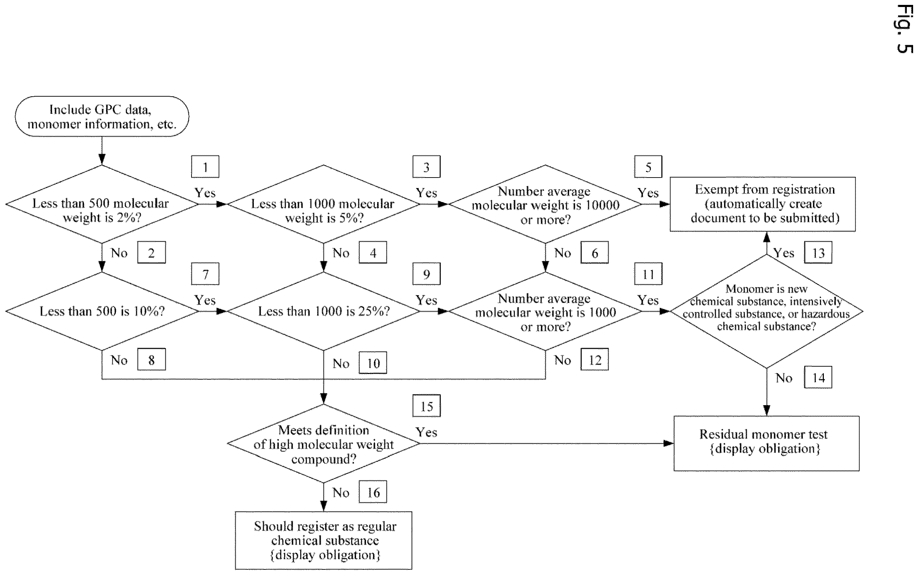

In other words, as shown in FIG. 5, the controller 160 determines whether the content (or component) less than a molecular weight of 500 in the first GPC measurement data for the first chemical substance is 2% or less, whether the content less than a molecular weight of 500 is 10% or less, whether the content less than a molecular weight of 1000 is 5% or less, whether the content less than a molecular weight of 1000 is 25% or less, whether the number average molecular weight is 10000 or more, whether the number average molecular weight is 1000 or more, whether the monomer is a new chemical substance, intensively controlled substance, or hazardous chemical substance, and it meets the definition of the high molecular weight compound, based on information about a first country (e.g., Korea) to manage the high molecular weight compound, the first GPC measurement data, legislation information according to the first country information, and pre-configured first monomer information necessary for legislation interpretation.

As another example, the controller 160 determines whether the second high molecular weight compound is exempt from registration based on information about a second country (e.g., the United States) to manage the high molecular weight compound, the second GPC measurement data, legislation information according to the second country information, and pre-configured second monomer information necessary for legislation interpretation.

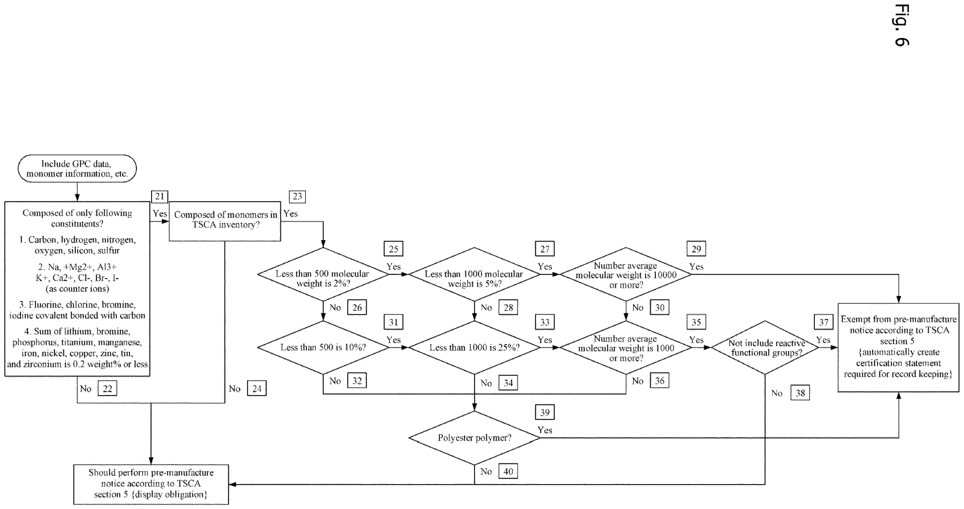

In other words, as shown in FIG. 6, the controller 160 determines whether it is composed of only specific components, whether it is composed of monomers in the TSCA inventory, whether the content less than a molecular weight of 500 is 2% or less, whether the content less than a molecular weight of 500 is 10% or less, whether the content less than a molecular weight of 1000 is 5% or less, whether the content less than a molecular weight of 1000 is 25% or less, whether the number average molecular weight is 10000 or more, whether the number average molecular weight is 1000 or more, whether it contains reactive functional groups, and whether it is a polyester polymer, based on information about a second country (e.g., the United States) to manage the high molecular weight compound, the second GPC measurement data, legislation information according to the second country information, and pre-configured second monomer information necessary for legislation interpretation (S620).

As a result of the determination (or the identification), when it is determined that the chemical substance is a high molecular compound exempt from registration, the controller 160 automatically creates related documents that should be submitted to the relevant organization (or government agency) to be exempt from the registration procedure for the chemical substance determined to be the high molecular weight compound. Here, the related documents may differ for each country. In the case of Korea, the related documents include a GPC analysis report and homogeneity data and, in the case of the United States, the related documents include CS (Certification Statement) required for record keeping.

As such, the controller 160 may automatically create related documents to be submitted to be exempt from the registration procedure when the chemical substance is determined to be a high molecular weight compound.

As an example, as shown in FIG. 5, if it is determined that the content less than a molecular weight of 500 in the first GPC measurement data for the first chemical substance is 2% or more, the content less than a molecular weight of 500 is 10% or more, and it meets the definition of the high molecular weight compound (or in the case of the path 2-8-15), the controller 160 determines that a residual monomer test should be performed and displays information about a residual monomer test on the first chemical substance on the display unit 140 (S630).

As another example, as shown in FIG. 5, if it is determined that the content less than a molecular weight of 500 in the first GPC measurement data for the first chemical substance is 2% or more, the content less than a molecular weight of 500 is 10% or more, and it does not meet the definition of the high molecular weight compound (or in the case of the path 2-8-16), the controller 160 determines that the first chemical substance is registered as a regular chemical substance, automatically creates other related documents to be submitted to a related organization to register the first chemical substance as a regular chemical substance, and displays the created other related documents on the display unit 140. Further, if an additional test is required for the first chemical substance, the controller 160 displays information related to the additional test on the display unit 140.

Further, it is determined (or identified) that the chemical substance is not a high molecular weight compound that meets the registration exemption condition, the controller 160 identifies obligations for the chemical substance based on the information about the country to manage the high molecular weight compound, GPC measurement data according to the GPC analysis, per-country legislation information according to the country information, and monomer information necessary for legislation interpretation and displays the identified obligations (or information about the obligations) on the display unit 140. In this case, the obligations may differ depending on the per-country legislation information.

As such, if the chemical substance is not determined to be a less hazardous high molecular weight compound, the controller 160 may identify the obligations to be performed according to the country's legislation in relation to the chemical substance and output the identified obligations to be identified by the user (or manager).

As an example, as shown in FIG. 5, if it is determined that the content less than a molecular weight of 500 in the first GPC measurement data for the first chemical substance is less than 2%, the content less than a molecular weight of 500 is less than 10%, and it meets the definition of the high molecular weight compound (or in the case of the path 2-8-15), the controller 160 determines that a residual monomer test should be performed and displays information about a residual monomer test on the first chemical substance on the display unit 140.

As another example, as shown in FIG. 5, if it is determined that the content less than a molecular weight of 500 in the first GPC measurement data for the first chemical substance is less than 2%, the content less than a molecular weight of 500 is less than 10%, and it does not meet the definition of the high molecular weight compound (or in the case of the path 2-8-16), the controller 160 determines that the first chemical substance is registered as a regular chemical substance, automatically creates other related documents to be submitted to a related organization to register the first chemical substance as a regular chemical substance, and displays the created other related documents on the display unit 140. Further, if an additional test is required for the first chemical substance, the controller 160 displays information related to the additional test on the display unit 140.

As another example, as shown in FIG. 6, if it is determined that the second chemical substance is not composed of only specific components (or in the case of the path 22), the controller 160 displays an obligation indicating that pre-manufacture notices need to be done according to TSCA Section 5 on the display unit 140 (S640).

According to embodiments of the present invention, as described above, any chemical substance or product and analysis information to allow high molecular weight compounds among chemical substances to meet legislation of each country are determined and, according to a result of the determination, obligations according to the legislation on the corresponding chemical substance of the corresponding country are automatically provided according to the purpose. Thus, it is possible to save time and efforts to check legislation related to chemical substances and fulfill obligations.

Further, according to embodiments of the present invention, as described above, it is also possible to perform GPC analysis on chemical substances or products, and high molecular weight compounds among chemical substances, identify the state of registration exemption, the state of residual monomer test, and the state of general chemical substance registration based on, e.g., information about the country to manage high molecular weight compounds according to a user input, GPC measurement data according to the GPC analysis, per-country legislation information according to the country information, and monomer information necessary for legislation interpretation, and to provide guide information or automatically create related documents according to the identified state. Thus, it is possible to enhance overall operation efficiency.

## Claims

1. A device for reviewing legislation on a chemical substance, comprising:
an analysis unit performing a qualitative and quantitative analysis function on a chemical substance or product to grasp a structure and concentration of the chemical substance or constituent chemical substances of the chemical product and determining a name and content of the chemical substance or product based on results of the performed qualitative and quantitative analysis function;
a controller identifying whether the chemical substance or product falls under registration and evaluation, whether the chemical substance or product falls under a cosmetics act, whether the chemical substance or product falls under a pharmaceutical affairs act, or whether the chemical substance or product falls under a narcotic control act in an order according to the acts based on the determined name, purpose of use, and usage of the chemical substance or product, and legislation information about an applicable country and searching for obligations according to legislation; and
a display unit displaying the obligations according to the legislation, searched by the controller,
wherein the analysis unit further generates GPC measurement data by performing a GPC analysis function on any chemical substance, wherein the controller determines whether the chemical substance is a high molecular weight compound exempt from registration based on information about a country to manage the high molecular weight compound, the GPC measurement data, per-country legislation information according to the country information, and monomer information required for legislation interpretation and, when the chemical substance is determined to be the high molecular weight compound exempt from registration, automatically creates a related document to be submitted to a related organization to be exempt from a registration procedure for the chemical substance determined to be the high molecular weight compound, and wherein the display unit further displays the related document.

2. The device of claim 1, wherein the controller controls the communication unit to transmit the created related document to a server of the related organization when a registration menu displayed on one side of the display unit is selected, and if a process for exemption from a registration procedure for the chemical substance by the transmitted related document is normally performed, receive information indicating that the process for exemption from the registration procedure for the chemical substance determined to be the high molecular weight compound is normally performed from the server of the related organization, and wherein the display unit displays the received information indicating that the process for exemption from the registration procedure for the chemical substance determined to be the high molecular weight compound is normally performed.

3. The device of claim 1, wherein when the chemical substance is determined to be not the chemical substance exempt from registration, the controller identifies the obligations for the chemical substance based on the information about the country to manage the high molecular weight compound, the GPC measurement data according to the GPC analysis, the per-legislation information according to the country information, and the monomer information required for legislation interpretation, and wherein the display unit displays the identified obligations.

4. The device of claim 1, wherein the per-country legislation information includes a chemical substance-related law for each country, including the Registration and Evaluation of Chemicals Act of the Republic of Korea and the Toxic Substances Control Act of the United States.

5. The device of claim 1, wherein the related document differs from country to country and includes a GPC analysis report and homogeneity data for the Republic of Korea and a certification statement (CS) necessary for record keeping for the United States.

6. A method for reviewing legislation on a chemical substance, the method comprising:
performing, by an analysis unit, a qualitative and quantitative analysis function on a chemical substance or product to grasp a structure and concentration of the chemical substance or constituent chemical substances of the chemical product and determining a name and content of the chemical substance or product based on results of the performed qualitative and quantitative analysis function;
identifying, by a controller, whether the chemical substance or product falls under registration and evaluation, whether the chemical substance or product falls under a cosmetics act, whether the chemical substance or product falls under a pharmaceutical affairs act, or whether the chemical substance or product falls under a narcotic control act in an order according to the acts based on the determined name, purpose of use, and usage of the chemical substance or product, and legislation information about an applicable country and searching for obligations according to legislation; and
displaying, by a display unit, the obligations according to the legislation, searched by the controller,
wherein the method further comprises: generating, by the analysis unit, GPC measurement data by performing a GPC analysis function on any chemical substance; determining, by the controller, whether the chemical substance is a high molecular weight compound exempt from registration based on information about a country to manage the high molecular weight compound, the GPC measurement data, per-country legislation information according to the country information, and monomer information required for legislation interpretation; when the chemical substance is determined to be the high molecular weight compound exempt from registration, automatically creating, by the controller, a related document to be submitted to a related organization to be exempt from a registration procedure for the chemical substance determined to be the high molecular weight compound; and displaying the related document through the display unit.

7. The method of claim 6, further comprising:
transmitting, by a communication unit, the created related document to a server of the related organization when a registration menu displayed on one side of the display unit is selected;
if a process for exemption from a registration procedure for the chemical substance by the transmitted related document is normally performed, receiving, through the communication unit, information indicating that the process for exemption from the registration procedure for the chemical substance determined to be the high molecular weight compound is normally performed from the server of the related organization; and
displaying, through the display unit, the information indicating that the process for exemption from the registration procedure for the chemical substance determined to be the high molecular weight compound is normally performed, received through the communication unit.

8. The method of claim 6, further comprising:
when the chemical substance is determined by the controller to be not the chemical substance exempt from registration, identifying, by the controller, the obligations for the chemical substance based on the information about the country to manage the high molecular weight compound, the GPC measurement data according to the GPC analysis, the per-legislation information according to the country information, and the monomer information required for legislation interpretation; and
displaying the identified obligations on the display unit.

## Patentansprüche

1. Vorrichtung zur Überprüfung von Gesetzgebung zu einer chemischen Substanz, umfassend:
eine Analyseeinheit, die eine qualitative und quantitative Analysefunktion an einer chemischen Substanz oder einem chemischen Produkt durchführt, um eine Struktur und Konzentration der chemischen Substanz oder chemischer Substanzbestandteile des chemischen Produkts zu erfassen und einen Namen und Inhalt der chemischen Substanz oder des chemischen Produkts basierend auf Ergebnissen der durchgeführten qualitativen und quantitativen Analysefunktion zu ermitteln;
eine Steuerung, die erkennt, ob die chemische Substanz oder das chemische Produkt unter Registrierung und Bewertung fällt, ob die chemische Substanz oder das chemische Produkt unter ein Kosmetikgesetz fällt, ob die chemische Substanz oder das chemische Produkt unter ein Arzneimittelgesetz fällt oder ob die chemische Substanz oder das chemische Produkt unter ein Betäubungsmittelkontrollgesetz fällt, in einer Reihenfolge gemäß den Gesetzen basierend auf dem ermittelten Namen, Verwendungszweck und Verwendung der chemischen Substanz oder des chemischen Produkts und Gesetzgebungsinformationen über ein anwendbares Land, und nach Verpflichtungen gemäß der Gesetzgebung sucht; und
eine Anzeigeeinheit, die die von der Steuerung gesuchten Verpflichtungen gemäß der Gesetzgebung anzeigt,
wobei die Analyseeinheit weiterhin GPC-Messdaten erzeugt, indem sie eine GPC-Analysefunktion an jeder chemischen Substanz ausführt, wobei die Steuerung ermittelt, ob die chemische Substanz eine von einer Registrierung befreite hochmolekulare Verbindung ist, basierend auf Informationen über ein Land, in dem die hochmolekulare Verbindung verwaltet werden soll, den GPC-Messdaten, landesspezifischen Gesetzgebungsinformationen gemäß den Länderinformationen und Monomerinformationen, die für eine Auslegung der Gesetzgebung erforderlich sind, und, wenn ermittelt wird, dass die chemische Substanz die von der Registrierung befreite hochmolekulare Verbindung ist, automatisch ein zugehöriges Dokument erstellt, das bei einer zugehörigen Organisation eingereicht werden soll, um von einem Registrierungsverfahren für die als die hochmolekulare Verbindung ermittelte chemische Substanz befreit zu werden, und wobei die Anzeigeeinheit weiterhin das zugehörige Dokument anzeigt.

2. Vorrichtung nach Anspruch 1, wobei die Steuerung die Kommunikationseinheit steuert, um das erstellte zugehörige Dokument an einen Server der zugehörigen Organisation zu übertragen, wenn ein auf einer Seite der Anzeigeeinheit angezeigtes Registrierungsmenü ausgewählt wird, und, wenn ein Prozess zur Befreiung von einem Registrierungsverfahren für die chemische Substanz durch das übertragene zugehörige Dokument normal durchgeführt wird, Informationen empfängt, die angeben, dass der Prozess zur Befreiung vom Registrierungsverfahren für die chemische Substanz, die als die hochmolekulare Verbindung ermittelt wurde, normal vom Server der zugehörigen Organisation durchgeführt wird, und wobei die Anzeigeeinheit die empfangenen Informationen anzeigt, die angeben, dass der Prozess zur Befreiung vom Registrierungsverfahren für die chemische Substanz, die als die hochmolekulare Verbindung ermittelt wurde, normal durchgeführt wird.

3. Vorrichtung nach Anspruch 1, wobei, wenn ermittelt wird, dass die chemische Substanz nicht die von der Registrierung befreite chemische Substanz ist, die Steuerung die Verpflichtungen für die chemische Substanz basierend auf den Informationen über das Land erkennt, in dem die hochmolekulare Verbindung verwaltet werden soll, den GPC-Messdaten gemäß der GPC-Analyse, den Informationen gemäß den Landesinformationen und den Monomerinformationen, die für eine Auslegung der Gesetzgebung erforderlich sind, und wobei die Anzeigeeinheit die erkannten Verpflichtungen anzeigt.

4. Vorrichtung nach Anspruch 1, wobei die länderspezifischen Gesetzgebungsinformationen ein chemikalienbezogenes Gesetz für jedes Land umfassen, einschließlich des Registrierungs- und Bewertungsgesetzes für Chemikalien der Republik Korea und des Gesetzes zur Kontrolle giftiger Substanzen der Vereinigten Staaten.

5. Vorrichtung nach Anspruch 1, wobei das zugehörige Dokument von Land zu Land unterschiedlich ist und einen GPC-Analysebericht und Homogenitätsdaten für die Republik Korea sowie eine Zertifizierungserklärung, CS, umfasst, die für eine Aufzeichnungsführung für die Vereinigten Staaten erforderlich ist.

6. Verfahren zur Überprüfung von Gesetzgebung zu einer chemischen Substanz, wobei das Verfahren umfasst:
Durchführen einer qualitativen und quantitativen Analysefunktion an einer chemischen Substanz oder einem chemischen Produkt durch eine Analyseeinheit, um eine Struktur und Konzentration der chemischen Substanz oder chemischer Substanzbestandteile des chemischen Produkts zu erfassen und einen Namen und Inhalt der chemischen Substanz oder des chemischen Produkts basierend auf Ergebnissen der durchgeführten qualitativen und quantitativen Analysefunktion zu ermitteln;
Erkennen durch eine Steuerung, ob die chemische Substanz oder das chemische Produkt unter Registrierung und Bewertung fällt, ob die chemische Substanz oder das chemische Produkt unter ein Kosmetikgesetz fällt, ob die chemische Substanz oder das chemische Produkt unter ein Arzneimittelgesetz fällt oder ob die chemische Substanz oder das chemische Produkt unter ein Betäubungsmittelkontrollgesetz fällt, in einer Reihenfolge gemäß den Gesetzen basierend auf dem ermittelten Namen, Verwendungszweck und Verwendung der chemischen Substanz oder des chemischen Produkts und Gesetzgebungsinformationen über ein anwendbares Land und Suchen nach Verpflichtungen gemäß der Gesetzgebung; und
Anzeigen der von der Steuerung gesuchten Verpflichtungen gemäß der Gesetzgebung durch eine Anzeigeeinheit,
wobei das Verfahren weiterhin umfasst: Erzeugen von GPC-Messdaten durch die Analyseeinheit, indem sie eine GPC-Analysefunktion an jeder chemischen Substanz ausführt; Ermitteln durch die Steuerung, ob die chemische Substanz eine von einer Registrierung befreite hochmolekulare Verbindung ist, basierend auf Informationen über ein Land, in dem die hochmolekulare Verbindung verwaltet werden soll, den GPC-Messdaten, landesspezifischen Gesetzgebungsinformationen gemäß den Länderinformationen und Monomerinformationen, die für eine Auslegung der Gesetzgebung erforderlich sind; wenn ermittelt wird, dass die chemische Substanz die von der Registrierung befreite hochmolekulare Verbindung ist, automatisches Erstellen eines zugehörigen Dokuments durch die Steuerung, das bei einer zugehörigen Organisation eingereicht werden soll, um von einem Registrierungsverfahren für die als die hochmolekulare Verbindung ermittelte chemische Substanz befreit zu werden; und Anzeigen des zugehörigen Dokuments durch die Anzeigeeinheit.

7. Verfahren nach Anspruch 6, ferner umfassend:
Übertragen des erstellten zugehörigen Dokuments an einen Server der zugehörigen Organisation durch eine Kommunikationseinheit, wenn ein auf einer Seite der Anzeigeeinheit angezeigtes Registrierungsmenü ausgewählt wird;
wenn ein Prozess zur Befreiung von einem Registrierungsverfahren für die chemische Substanz durch das übertragene zugehörige Dokument normal durchgeführt wird, Empfangen von Informationen durch die Kommunikationseinheit, die angeben, dass der Prozess zur Befreiung vom Registrierungsverfahren für die chemische Substanz, die als die hochmolekulare Verbindung ermittelt wurde, normal vom Server der zugehörigen Organisation durchgeführt wird; und
Anzeigen der von der Kommunikationseinheit empfangenen Informationen durch die Anzeigeeinheit, die angeben, dass der Prozess zur Befreiung vom Registrierungsverfahren für die chemische Substanz, die als die hochmolekulare Verbindung ermittelt wurde, normal durchgeführt wird.

8. Verfahren nach Anspruch 6, weiterhin umfassend:
wenn von der Steuerung ermittelt wird, dass die chemische Substanz nicht die von der Registrierung befreite chemische Substanz ist, Erkennen der Verpflichtungen für die chemische Substanz basierend auf den Informationen über das Land, in dem die hochmolekulare Verbindung verwaltet werden soll, den GPC-Messdaten gemäß der GPC-Analyse, den Informationen gemäß den Landesinformationen und den Monomerinformationen, die für eine Auslegung der Gesetzgebung erforderlich sind; und
Anzeigen der erkannten Verpflichtungen auf der Anzeigeeinheit.

## Revendications

1. Dispositif pour vérifier la législation relative à une substance chimique, comprenant:
une unité d'analyse effectuant une fonction d'analyse qualitative et quantitative sur une substance ou un produit chimique pour obtenir une structure et une concentration de la substance chimique ou des substances chimiques constituant le produit chimique et déterminant un nom et une teneur de la substance ou du produit chimique sur la base des résultats de la fonction d'analyse qualitative et quantitative effectuée;
un dispositif de commande déterminant si la substance ou le produit chimique relève de l'enregistrement et de l'évaluation, si la substance ou le produit chimique relève d'un règlement sur les produits cosmétiques, si la substance ou le produit chimique relève d'une loi sur les pharmacies ou si la substance ou le produit chimique relève d'une loi sur les stupéfiants, dans un ordre correspondant à ces lois, sur la base du nom déterminé, du but d'utilisation et de l'utilisation de la substance ou du produit chimique, ainsi que des informations sur la législation d'un pays applicable et de la recherche d'obligations prévues par la législation; et
une unité d'affichage affichant les obligations prévues par la législation, recherchées par le dispositif de commande,
dans lequel l'unité d'analyse génère en outre des données de mesure GPC en exécutant une fonction d'analyse GPC sur une quelconque substance chimique, dans lequel le dispositif de commande détermine si la substance chimique est un composé dont le poids moléculaire est élevé, exempte d'enregistrement sur la base d'informations concernant un pays afin de gérer le composé de poids moléculaire élevé, les données de mesure GPC, les informations sur la législation par pays en fonction des informations sur le pays, et des informations sur les monomères nécessaires à l'interprétation de la législation et, lorsqu'il est déterminé que la substance chimique est un composé à masse moléculaire élevée exempte d'enregistrement, crée automatiquement un document connexe à soumettre à une organisation connexe afin d'être exempte d'une procédure d'enregistrement pour la substance chimique déterminée comme étant un composé de masse moléculaire élevée, et dans lequel l'unité d'affichage affiche en outre le document connexe.

2. Dispositif selon la revendication 1, dans lequel le dispositif de commande amène l'unité de communication à transmettre le document connexe créé à un serveur de l'organisation concernée lorsqu'un menu d'enregistrement affiché sur un côté de l'unité d'affichage est sélectionné, et si un processus d'exemption d'une procédure d'enregistrement pour la substance chimique par le document connexe transmis est exécuté normalement, à recevoir des informations indiquant que le processus d'exemption de la procédure d'enregistrement pour la substance chimique déterminée comme étant le composé de poids moléculaire élevé est exécuté normalement, et dans lequel l'unité d'affichage affiche les informations reçues indiquant que le processus d'exemption de la procédure d'enregistrement pour la substance chimique déterminée comme étant le composé de poids moléculaire élevé est exécuté normalement.

3. Dispositif de la revendication 1, dans lequel, lorsqu'il est déterminé que la substance chimique n'est pas une substance chimique exempte d'enregistrement, le dispositif de commande identifie les obligations relatives à la substance chimique sur la base des informations concernant le pays pour gérer le composé de poids moléculaire élevé, les données de mesure GPC selon l'analyse GPC, les informations exigées par la loi selon les informations sur le pays, et les informations sur le monomère requises pour l'interprétation de la loi, et dans lequel l'unité d'affichage affiche les obligations identifiées.

4. Dispositif de la revendication 1, dans lequel les informations sur la loi par pays comprennent une loi relative aux substances chimiques pour chaque pays, y compris la loi sur l'enregistrement et l'évaluation des produits chimiques de la République de Corée et la loi sur le contrôle des substances toxiques des États-Unis.

5. Dispositif de la revendication 1, dans lequel le document connexe diffère d'un pays à l'autre et comprend un rapport d'analyse GPC et des données d'homogénéité pour la République de Corée et une déclaration de certification (CS) nécessaire à la tenue d'un registre pour les États-Unis.

6. Procédé pour vérifier la législation relative à une substance chimique, comprenant :
l'exécution, par une unité d'analyse, d'une fonction d'analyse qualitative et quantitative sur une substance ou un produit chimique pour obtenir une structure et une concentration de la substance chimique ou des substances chimiques constituant le produit chimique et la détermination d'un nom et d'une teneur de la substance ou du produit chimique sur la base des résultats de la fonction d'analyse qualitative et quantitative exécutée;
l'identification, par un dispositif de commande, si la substance chimique ou le produit relève de l'enregistrement et de l'évaluation, si la substance chimique ou le produit relève d'un règlement sur les produits cosmétiques, si la substance chimique ou le produit relève d'une loi sur les pharmacies ou si la substance chimique ou le produit relève d'une loi sur le contrôle des stupéfiants, dans un ordre conforme aux lois, sur la base du nom déterminé, du but d'utilisation et de l'utilisation de la substance ou du produit chimique, ainsi que des informations sur la législation d'un pays applicable et de la recherche d'obligations prévues par la législation; et
l'affichage, par une unité d'affichage, des obligations prévues par la législation, recherchées par le dispositif de commande,
le procédé comprenant en outre: la génération, par l'unité d'analyse, de données de mesure GPC en exécutant une fonction d'analyse GPC sur une quelconque substance chimique; la détermination, par le dispositif de commande, si la substance chimique est un composé de poids moléculaire élevé exempte d'enregistrement sur la base d'informations concernant un pays pour gérer le composé de poids moléculaire élevé, les données de mesure GPC, les informations sur la législation par pays en fonction des informations sur le pays, et les informations sur les monomères requises pour l'interprétation de la législation; lorsqu'il est déterminé que la substance chimique est un composé de masse moléculaire élevée exempte d'enregistrement, la création automatique, par le dispositif de commande, d'un document connexe à soumettre à une organisation connexe afin d'être exempte d'une procédure d'enregistrement pour la substance chimique déterminée comme étant un composé de masse moléculaire élevée; et l'affichage du document connexe par l'intermédiaire de l'unité d'affichage.

7. Procédé selon la revendication 6, consistant en outre à:
transmettre, par une unité de communication, le document créé à un serveur de l'organisation concernée lorsqu'un menu d'enregistrement affiché sur un côté de l'unité d'affichage est sélectionné;
si une procédure d'exemption de la procédure d'enregistrement de la substance chimique par le document connexe transmis est exécutée normalement, recevoir, par l'intermédiaire de l'unité de communication, d'informations indiquant que la procédure d'exemption de la procédure d'enregistrement de la substance chimique déterminée comme étant le composé de poids moléculaire élevé est normalement exécutée à partir du serveur de l'organisation connexe; et
afficher, par l'intermédiaire de l'unité d'affichage, les informations indiquant que la procédure d'exemption de la procédure d'enregistrement de la substance chimique déterminée comme étant un composé de poids moléculaire élevé est effectuée normalement, reçue par l'intermédiaire de l'unité de communication.

8. Procédé selon la revendication 6, consistant en outre à:
lorsque la substance chimique est déterminée par le dispositif de commande comme n'étant pas la substance chimique exempte d'enregistrement, identifier les obligations pour la substance chimique sur la base des informations concernant le pays pour gérer le composé de masse moléculaire élevée, les données de mesure GPC selon l'analyse GPC, les informations par législation selon les informations du pays et les informations sur le monomère requises pour l'interprétation de la législation; et
afficher les obligations identifiées sur l'unité d'affichage.
